# EUROPEAN PATENT SPECIFICATION

(11) **EP 0 585 497 B1**
(45) Date of publication and mention of the grant of the patent: **16.10.1996**
(21) Application number: 92307569.1
(22) Date of filing: 19.08.1992
(51) Int. Cl.: G11B 5/86, G11B 27/02

(54) **Tape dubbing apparatus and divided master tapes producing apparatus**
Gerät zum Kopieren eines Bandes und Gerät zum Erzeugen geteilter Mutterbande
Appareil de copie de bande et appareil de production de bandes-mères divisées

(43) Date of publication of application: 09.03.1994
(73) Proprietor: VICTOR COMPANY OF JAPAN, LIMITED, Yokohama-Shi Kanagawa-Ken 221 (JP)
(72) Inventor: Nakatani, Yoichiro, Mitoshi, Ibaraki-ken (JP)
(74) Representative: Gladwin, Philip

(56) References cited:
- EP-A- 0 016 560
- EP-A- 0 261 826
- EP-A- 0 312 406
- EP-A- 0 475 689
- US-A- 4 410 917
- PATENT ABSTRACTS OF JAPAN vol. 10, no. 76 (P-440)(2133) 26 March 1986 & JP-A-60 214 492

## Description

### Field of the Invention

The present invention relates to an apparatus for dubbing a magnetic tape such as video soft tape, audio soft tape or computer soft tape, etc., at high speed and a device for producing a divided master tape for high speed dubbing.

In this specification, terms involving a tape speed are defined in accordance with the following definitions:

### "N Speed Playback"

To playback a tape at a running speed which is N times the speed with which the tape is recorded, where N is an integer larger than 1.

### "N Speed Recording"

To record a signal reproduced from a master tape played back according to the "N speed Playback" on a recording medium, or to record a signal on a tape running at a speed which is N times a nominal playback speed of that tape, where N is an integer larger than 1.

### "N Speed Dubbing"

A dubbing operation in which a master tape for dubbed is played back according to the "N speed Playback" and a resultant reproduced signal thus obtained is recorded as a recording signal on a slave tape running at a speed which is N times a nominal playback speed of the slave tape, where N is an integer larger than 1.

In this case, although a transfer rate of the recording signal from a master tape playback device to a slave tape recording device is N times that of the original recording signal which is used for recording the master tape, actual running speeds of the master and slave tapes are not necessarily identical each other but they can be different each other in this "N Speed Dubbing" operation.

### "Double Rate"

A status of signal transfer rate which is twice an original transfer rate (signal transfer rate used for master tape recording).

### "Real Time Speed"

This represents the "N Speed Playback", the "N Speed Recording", or the "N Speed Dubbing" where N is 1, or a tape speed which is equal to its original or nominal speed.

### "Double Speed"

This represents the "N Speed Playback", the "N Speed Recording", or the "N Speed Dubbing" where N is 2.

### Description of the related Art

A dubbing apparatus in which a signal reproduced by a master tape playback device is supplied to a plurality of slave recording devices to dub the signal on slave magnetic tapes in real time has been known.

Further, a contact print method in which a mirror image tape signal pattern is provided on a master tape having relatively large coercive force and is transferred to a slave magnetic tape by making a magnetic surface of the master tape in intimate contact with the slave magnetic tape while externally applying a low frequency magnetic field thereto has been known as a high speed dubbing system.

Since the former conventional dubbing system is of a real time dubbing system in which the slave tapes are running at their normal playback speed and recorded with a signal obtained by playing back the master tape at its recording speed, efficiency of slave tape production is low. As to the contact print method, there are problems of degradation of signal frequency characteristics and/or S/N ratio.

European Patent Application EP-A-0 475 689 discloses a dubbing apparatus which reproduces information from N identical master tapes with N corresponding reproducing devices. The N master tapes are transported at N times the normal speed while the rotary reproducing heads are rotated only at the normal speed so that only 1 out of N tracks is reproduced by each reproducing device. The playback start positions of the N master tapes are offset by one track so that each track is reproduced by only one reproducing device. The N reproduced signals from the N master tapes are time-compressed by a factor N and combined so as to restore the original data sequence of the master tapes in a compressed form. The thus restored data sequence is then recorded on one or more slave tapes at a speed equal to N times the normal speed.

United States Patent No. 4,410,917 describes a dubbing apparatus in which a master tape is played back at a normal speed, the digital data is time-compressed by a factor N, and the compressed digital data is recorded on a slave tape at N times the normal speed.

European Patent Application EP-A 0 261 826 discloses a dubbing apparatus in which a master tape is played back at a high speed which is greater than the normal speed and simultaneously recorded on slave tapes at this same high speed.

The present invention is made in view of these problems and has an object to provide a high efficiency, high performance dubbing apparatus and a divided master tape producing apparatus for realizing high speed dubbing.

Besides, in a digital VTR, etc., according to D2 standard (one of the industry standards for digital video tape recording), an accompanying audio signal becomes discontinuous at a tape editing point. In order to prevent such signal discontinuity from being reproduced as noise, such audio signal is faded in at an editing start point and faced out at an editing end point, with a silence period of about 3 msec therebetween.

Therefore, when a divided master tape is produced or a produced divided master tape is played back by using such VTR, an audio signal becomes discontinuous at an editing point provided during production of the divided master tape.

The present invention is intended to solve such problems and has an object to provide a dubbing apparatus having no discontinuity of audio signal.

### SUMMARY OF THE INVENTION

In order to solve the problems mentioned above, a dubbing apparatus according to the present invention as defined in appended claim 1 is provided.

Another and specific object of the present invention is to provide a divided master tape producing apparatus comprising a master tape playback device for playing back a master tape recorded with a master signal, signal dividing device for dividing the master signal reproduced from the master tape playback device into an N number of master signals at a predetermined time interval, and a divided master tape recording device for producing divided master tapes by recording the divided N number of master signals on a corresponding number of divided master tapes, a corresponding one of the divided master signals being arranged to be continuous on each of the divided master tapes, so that N number of divided master tapes having a continuous signal recorded thereon respectively, are produced.

The signal dividing device may further comprise a memory device for storing the N number of master signals and a supplying device for supplying the N number of master signals stored in the memory device to corresponding recording units of the divided master tape recording device. Accordingly, it is possible to prolong the time of intermittent recording operation of the divided master tape recording device and to record signals with improved stability.

According to another aspect of the present invention, a divided master tape producing apparatus as defined in appended claim 3 is provided. Accordingly, it is possible to prolong the time of intermittent recording operation of the divided master tape recording device and to record signals with improved stability.

Other objects and further features of the present invention will be apparent from the following detailed description with respect to preferred embodiments of the invention when read in conjunction with the accompanying drawings.

### BRIEF DESCRIPTION OF THE DRAWINGS

Fig. 1 is a block circuit diagram of a double speed dubbing apparatus according to an embodiment of the present invention;
Fig. 2 illustrates a recorded content of 2 divided master tapes to be used in the apparatus in Fig. 1;
Fig. 3 is a block diagram of a double speed recording device for video tape according to an embodiment of the present invention;
Fig. 4 shows an operation of a double speed recording signal producing device according to an embodiment of the present invention;
Fig. 5 is a block diagram of a divided master tape producing apparatus according to another embodiment of the present invention;
Fig. 6 is a block diagram of a divided master tape producing apparatus according to a further embodiment of the present invention;
Fig. 7 is a block diagram of a divided master tape producing apparatus according to a still further embodiment of the present invention;
Fig. 8 is a block diagram of a recording device for producing a delayed audio-signal-superposed divided master tape, according to an embodiment of the present invention;
Fig. 9 is a block diagram of a playback device for playing back a delayed audio-signal-superposed divided master tape, according to another embodiment of the present invention; and
Fig. 10 is a time chart showing an operation of a playback device for playing back a delayed audio-signal-superposed divided master tape, according to the present invention.

### DETAILED DESCRIPTION OF THE PREFERRED EMBODIMENTS

An embodiment of the present invention will be described with reference to the accompanying drawings.

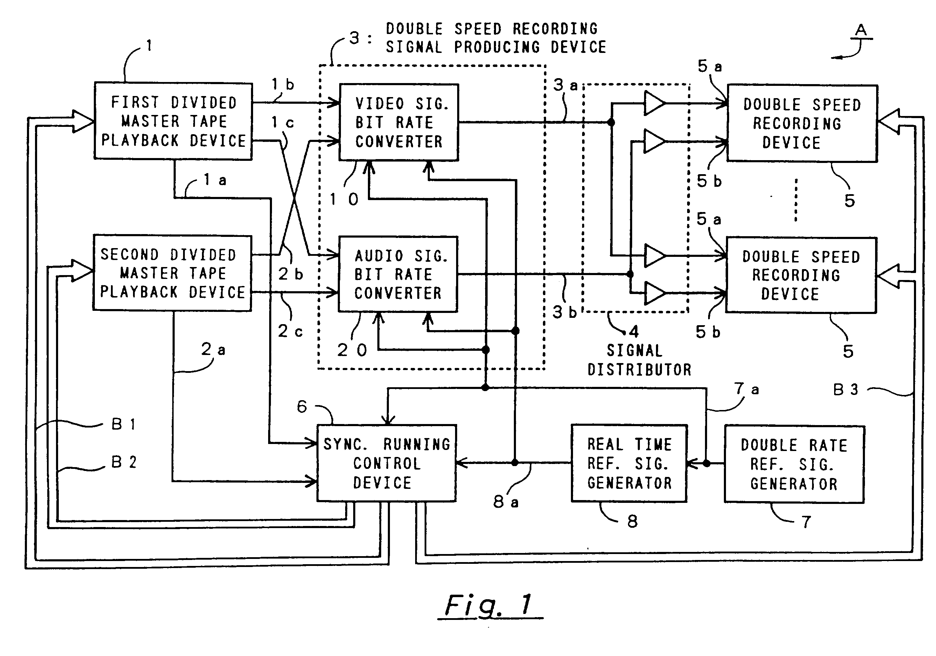

Fig. 1 is a block circuit diagram of a double speed dubbing apparatus according to the present invention.

The double speed dubbing apparatus "A" in Fig. 1 is adapted to dub magnetic video tapes recorded with video and audio signals.

The dubbing apparatus "A" comprises first and second divided master tape playback devices 1 and 2, a double speed recording signal producing device 3, a signal distributor 4, a single or a plurality of double speed recording devices 5, a synchronous running control device 6, a double rate reference signal generator 7 and a real time reference signal generator 8.

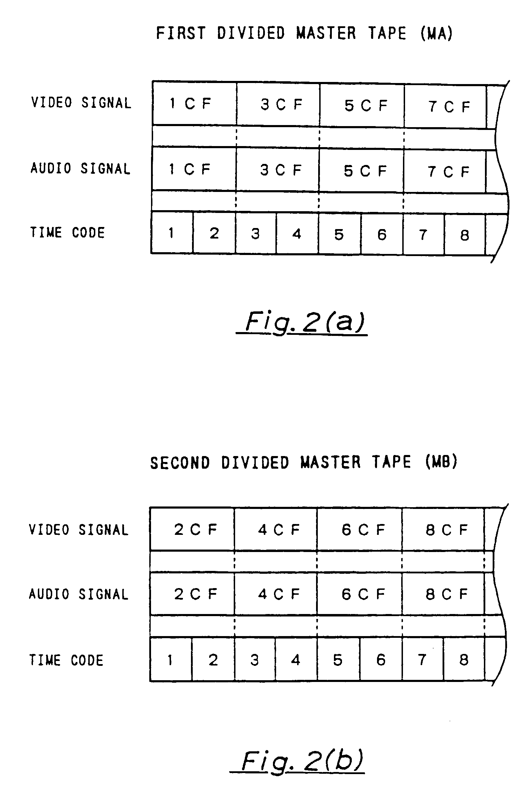

Fig. 2 illustrates recorded contents of 2 divided master tapes MA and MB.

On a first divided master tape MA shown in Fig. 2(a). video signal and audio signal related to odd numbered color frames (CF) are recorded together with a time code and, on a second divided master tape MB shown in Fig. 2(b), video and audio signals related to even numbered color frames are recorded, similarly with a time code.

On each of the divided master tapes MA and MB, the time code is recorded such that it increments 2 counts for every video color frame.

These divided master tapes MA and MB are played back by the first and second divided master tape playback devices 1 and 2 shown in Fig. 1, respectively.

The double rate reference signal generator 7 produces a video reference signal or a timing signal 7a at double speed, that is, at a rate twice the original recording rate.

The real time reference signal generator 8 produces a real-time timing signal 8a on the basis of the double speed timing signal 7a.

The synchronous running control device 6 supplies the real-time timing signal 8a through playback device control buses B1 and B2 to the first and second divided master tape playback devices 1 and 2, respectively, and controls these devices 1 and 2 to run synchronized together at a real time playback speed, by monitoring time code signals 1a and 2a from the first and second divided master tape playback devices 1 and 2, and sending running control information through the control buses B1 and B2 to tie first and second divided master tape playback devices 1 and 2, respectively.

Further, the synchronous running control device 6 supplies the double speed timing signal 7a generated by the double rate reference signal generator 7 and running control information to the respective double speed recording devices 5 through the control bus B3 to control thereof as such that they run at the double speed in synchronization with the playback operation of the respective master tape playback devices 1 and 2.

The double speed recording signal producing device 3 for producing a double speed recording signal comprises a bit rate converter 10 for video signal and a bit rate converter 20 for audio signal.

The video signal bit rate converter 10 functions such that it responds to a real time video signal 1b reproduced (with real time speed) by the first divided master tape playback device 1 and to a real time video signal 2b reproduced by the second divided master tape playback device 2. and makes the bit rates of these video signals 1b and 2b double, respectively, and combines the respective video signals 1b and 2b into a single composed video signal 3a which is arranged in the color frame sequence.

Likewise, the audio signal bit rate converter 20 responds to audio signals 1c and 2c outputted from the respective playback devices 1 and 2 and doubles their bit rates respectively and combines them in the predetermined sequence.

In a case where video and audio signals recorded on the divided master tapes MA and MB are digital signals, the respective bit rate converters 10 and 20 comprise temporary storage devices such as shift registers or RAMs, etc., and signal processing circuits such as read/write control devices therefor, and write the digital signals to or read them from the temporary storage devices in synchronism with the real time timing signal 8a.

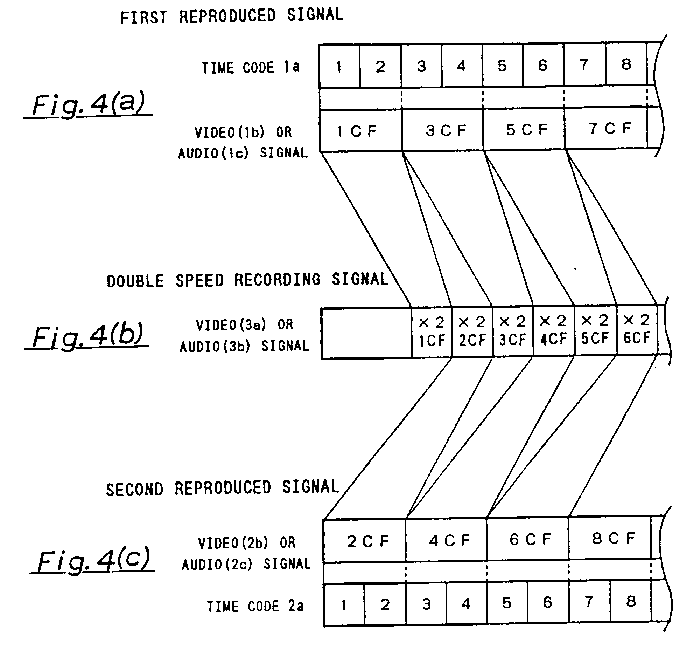

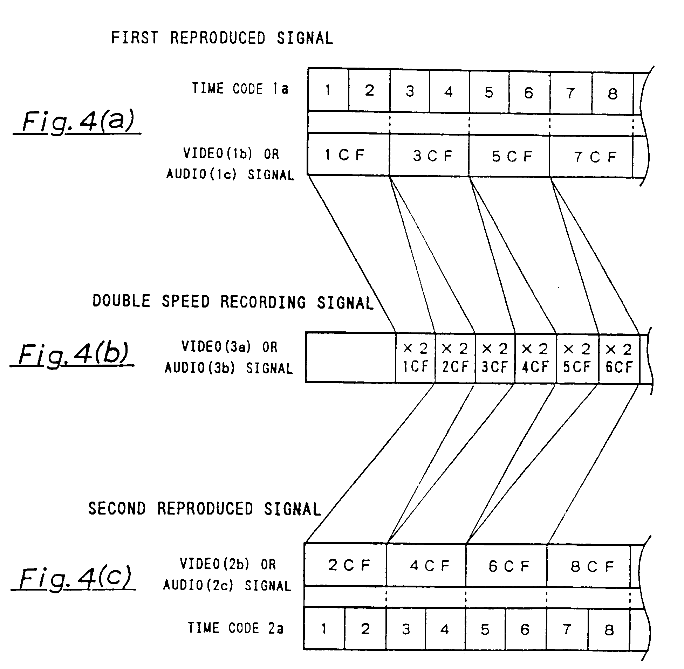

Figs. 4(a) and 4(c) show respectively time code signals 1a and 2a, video signals 1b and 2b (or audio signals 1c and 2c) which are reproduced from the first and second divided master tape playback devices 1 and 2 then inputted to the double speed recording signal producing device 3.

Fig. 4(b) shows the above video (or audio) signal being converted into a doubled bit rate, arranged in a order of color frames and outputted by the double speed recording signal producing device 3 as a composed video signal 3a (or audio signal 3b).

In a case where video and audio signals recorded on the divided master tapes MA and MB are analog signals, the respective bit rate converters 10 and 20 comprise, in addition to the components described above for digital signals, A/D converters for converting reproduced analog signals into corresponding digital signals which are stored in the temporary storage device and D/A converters for converting the digital signals having doubled bit rate read out from the temporary storage device into analog signals.

The signal distributor 4 comprises a plurality of buffer amplifiers, etc., which operate to supply double speed video signal 3a and double speed audio signal 3b outputted from the double speed recording signal producing device 3 to video signal recording input terminals 5a and audio signal recording input terminals 5b of the respective double speed recording devices 5, respectively.

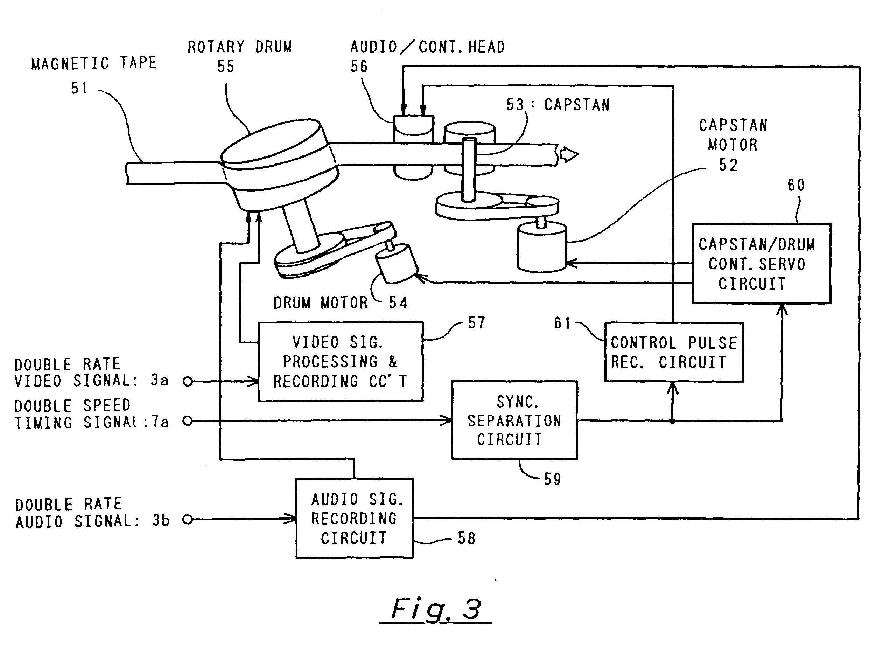

Fig. 3 is a block diagram of the double speed recording device 5 for a video tape of VHS (one of the industry standard formats) system.

A magnetic tape 51 to be used as a divided master tape is transported by a capstan 53 which is driven by a capstan motor 52, and is recorded with video recording signal and audio recording signal at a double rate (doubled data transmission rate) and a control signal with respective video and audio recording heads (not shown) and a control head 56 while the magnetic tape 51 is wrapped around and passed along a rotary drum 55 driven by a drum motor 54 and is taken up on a take-up reel (not shown).

A video signal processing and recording circuit 57 derives a luminance signal and a chrominance signal from the double rate video signal 3a, frequency-modulates the luminance signal, converts the chrominance signal into lower frequency signal, combines them again and outputs a resultant mixture through a recording amplifier (not shown) to the video recording head of the rotary drum 55 to record it on the magnetic tape 51.

An audio signal recording circuit 58 frequency-modulates a left channel signal of the double rate audio signal 3b to a frequency of 1.3 MHz X 2 and a right channel signal thereof to a frequency of 1.7 MHz X 2, combines them and records a resultant signal on a video track portion of the magnetic tape 51 through the recording amplifier (not shown) and the FM audio signal recording head (not shown) mounted on the rotary drum 55.

In this recording system, after an FM signal related to audio signal is recorded on an under layer portion of the magnetic tape 51 in the form of under layer recording when the video signal is over-written on the same track of a surface portion of the tape after the FM audio signal is recorded.

For a longitudinal track audio signal, it is conventionally recorded on a longitudinal audio track through an audio recording amplifier (not shown) and an audio/control head 56.

The double speed timing signal (double rate video reference signal) 7a generated by the double rate reference signal generator 7 is supplied to a synch. separator circuit 59. The circuit 59 separates, from the signal 7a, a vertical synchronizing signal and outputs the later to a capstan/drum control servo circuit 60 and a control pulse recording circuit 61.

The capstan/drum control servo circuit 60 controls the drum motor 54 and the capstan motor 52 by using the vertical synchronizing signal as a reference.

When a video signal, etc., of NTSC system is to be recorded at a double speed, the rotary drum 55 having a pair of heads is controlled such that its rotational speed becomes 60 rps (revolution per second) when its real time speed is 30 rps and simultaneously controls the capstan 53 as such that the running speed of the magnetic tape 51 becomes 6.67 cm/sec when its real time speed is 3.335 cm/sec.

The control pulse recording circuit 61 produces a control pulse signal by wave-shaping the vertical synchronizing signal from the synch. separator circuit 59 and records it on a control track of the magnetic tape 51 through the audio/control head 56.

With the construction mentioned above, since the double speed recording signal producing device 3 produces the double speed recording signals 3a and 3b shown in Fig. 4(b) on the basis of the reproduced signals 1b, 1c, 2b and 2c which are obtained by playing the divided master tapes MA and MB in real time on the respective first and second divided master tape playback devices 1 and 2, it is possible to dub a slave tape at a double speed by recording the signals 3a and 3b in a double speed mode.

Although, in this embodiment, the original master tape is divided to two divided master tapes, it is possible to perform a dubbing at a speed 3 or more times the real time speed by increasing the dividing number of the tape up to 3 or more and converting its bit rate 3 or more times the real time bit rate.

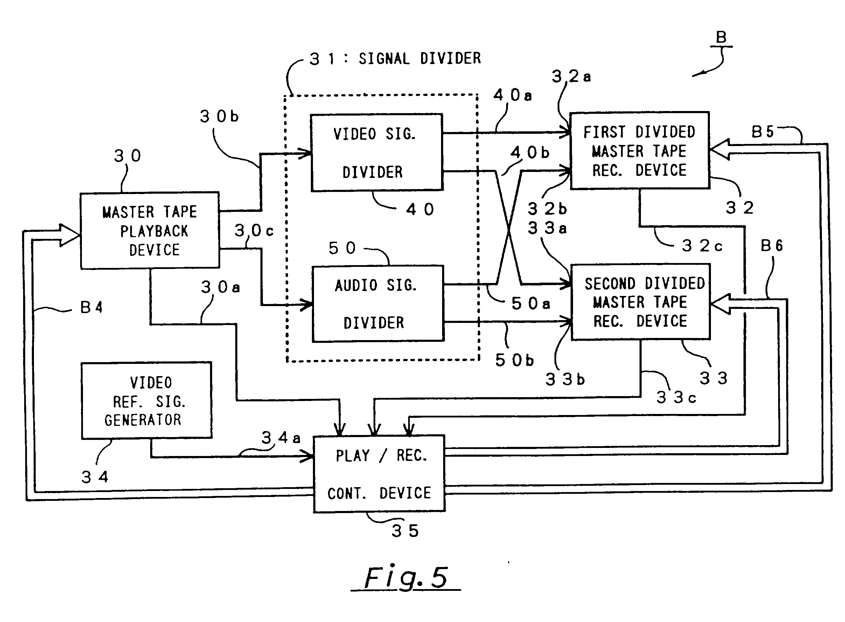

Fig. 5 is a block diagram of the divided master tape producing device according to the present invention.

The divided master tape producing apparatus "B" is adapted to produce the divided master tapes MA and MB which are respectively recorded with 2 time-divisionally divided master signals of master video and audio signals reproduced from an original master tape "M" (not shown), respectively.

In this embodiment, the divided master tapes MA and MB are produced on the basis of the original master tape having a prerecorded time code.

The divided master tape producing device "B" comprises a master tape playback device 30, a signal divider 31, a first and second divided master tape recording devices 32 and 33, a video reference signal generator 34 and a playback/recording control device 35.

The playback/recording control device 35 supplies a video reference signal 34a outputted from the video reference signal generator 34 to the master tape playback device 30 through a reproducing control bus B4 and, when the original master tape "M" loaded in the master tape playback device 30 has a prerecorded time code, the control device 35 controls the playback device 30 to play the original master tape "M" at a predetermined speed by monitoring a reproduced time code signal 30a.

Further, the playback/recording control device 35 supplies the video reference signal 34a through respective recording device control buses B5 and B6 to the respective divided master tape recording devices 32 and 33 and controls the latter such that they record the video reference signal 34a alternately, thus time-divisionally, between the divided master tape recording devices 32 and 33.

Alternatively, the control of the first and second divided master tape recording devices 32 and 33 may be performed by using the time code signal 30a instead of the video reference signal 34a. Further, the playback/recording control device 35 may control the first and second divided master tape recording devices 32 and 33 in synchronism with each other by monitoring the time code from the master tape playback device 30 and time codes 32c and 33c reproduced from the first and second divided master tape recording devices 32 and 33.

The signal divider 31 comprises a video signal divider 40 and an audio signal divider 50.

The video signal divider 40 is adapted to output the reproduced video signal 30b from the master tape playback device 30 by switching alternately thus time-divisionally at a rate of color frame to supply a video signal 40a of odd numbered color frames to a video signal recording input terminal 32a of the first divided master tape recording device 32 and a video signal 40b of even numbered color frames to a video signal recording input terminal 33a of the second divided master tape recording device 33.

The audio signal divider 50 serves to output the reproduced audio signal 30c by switching it at the same timing as that of the video signal divider 40 such that audio signal 50a related to the odd numbered color frame to an audio recording signal input terminal 32b of the first divided master tape recording device 32 and an audio signal 50b related to the even numbered color frames to an audio recording signal input terminal 33b of the second divided master tape recording device 33.

When the original master signal recorded on the original master tape "M" is an analog signal, the signal dividers 40 and 50 are constituted with video signal switching circuits (analog switches for video signal) etc., respectively. When the signal recorded on the original master tape "M" is a digital signal, they may be constituted as such that signal distribution is performed by logic circuits.

In the divided master tape producing device "B" constituted as mentioned above, the respective divided master tape recording devices 32 and 33 operate alternatively and intermittently in synchronism with the playback of the original master tape "M" on the master tape playback device 30 in the manner that the reproduced video signal 30b and the reproduced audio signal 30c from the original master tape "M" is distributed alternately and time divisionally at a predetermined interval to respective divided master tape recording devices 32 and 33. Accordingly, the first and second divided master tapes MA and MB shown in Fig. 2 are produced.

Although, in this embodiment, the original master signal is divided to two divided master tapes, it is possible to divide the original master signal by 3 or more.

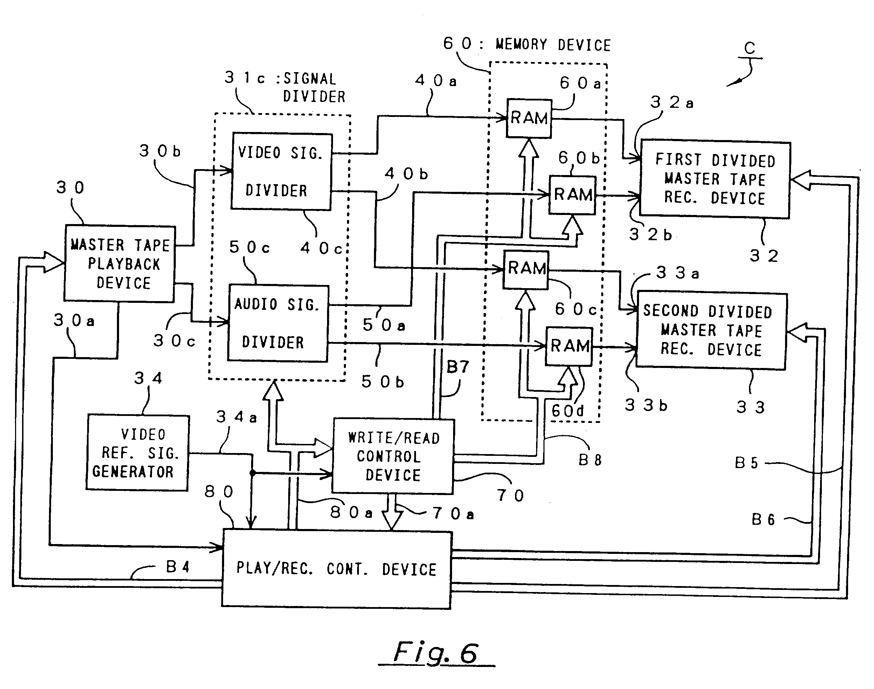

Fig. 6 is a block diagram of another embodiment of the divided master tape producing device according to the present invention.

The divided master tape producing device "C" comprises a memory device 60 for temporarily storing video signals 40a and 40b and audio signals 50a and 50b of respective time-division signals from a signal divider 31C, a write/read control device 70 for controlling write and read operations with respect to the memory device 60 and a playback/recording control device 80 associated with the write/read control device 70 for controlling operations of the master tape playback device 30 and the respective master tape recording devices 32 and 33.

The memory device 60 comprises a plurality of RAMs (random access memories) 60a, 60b, 60c and 60d. The respective RAMs 60a-60d are 2-port memories each having a write port and a read port.

The write/read control device 70 responds to a video reference signal from a video reference signal generator 34 to control the write/read operations.

The write/read control device 70 switches a write operation, through RAM control buses B7 and B8, to either a first series RAMs 60a and 60b or a second series RAMs 60c and 60d, according to a series select instruction 80a given by the playback/recording control device 80.

The write/read control device 70 starts reading continuously, with a phase shifted from the write timing, the data stored up to the moment when a total data amount written in the respective RAMs 60a - 60d reaches a preset amount, and concurrently sends a read start instruction 70a to the playback/recording control device 80.

The playback/recording control device 80 responds to the read start instruction 70a to send, through the recording device control buses B5 and B6, an instruction for turning the first and second divided master tape recording devices 32 and 33 into a recording mode.

It should be noted that the write/read control device 70 may be constituted such that it sends a pause instruction to the playback/reproducing control device 80 to temporarily stop a reproducing operation of the master tape playback device 30, when the respective RAMs 60a-60d are completed to be written with a predetermined amount of data, and during this stop period, the write/read control device 70 reads the contents of the RAMs 60a-60d simultaneously and to turn the first and second divided master tape recording devices 32 and 33 into a recording mode through the playback/recording control device 80.

As mentioned above, since the divided master tape producing device "C" according to the present invention is constructed such that, after storing the two divided master signals in the storage device 60, it supplies these signals to corresponding divided master tape recording devices 32 and 33 continuously, it is possible to prolong the time for intermittent recording operation of the first and second divided master tape recording devices 32 and 33, causing a recording to be more stable.

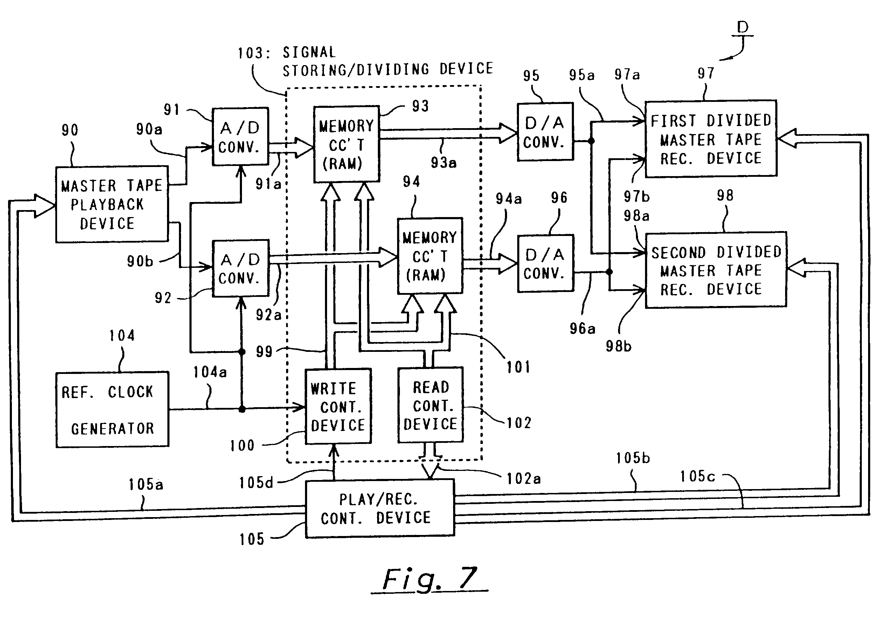

Fig. 7 shows a block diagram of a further embodiment of the divided master tape producing apparatus according to the present invention.

The divided master tape producing apparatus "D" shown in Fig. 7 comprises A/D converters 91 and 92 for converting an analog video signal 90a and an analog audio signal 90b outputted from a master tape playback device 90 into digital signals, respectively, memory circuits 93 and 94 for storing an A/D converted video signal 91a and an audio signal 92b and D/A converters 95 and 96 for converting the digital video and audio signals 93a and 94a read out from the memory circuits 93 and 94 into analog signals, respectively.

When the master tape "M" and first and second divided master tape recording devices 97 and 98 are of digital type, respectively, the A/D converters 91 and 92 and the D/A converters 95 and 96 may be omitted.

A divided video signal 95a from the D/A converter 95 for video signal is supplied to video signal input terminals 97a and 98a of the first and second divided master tape recording devices 97 and 98 signal paths thereto are regarded as first and second channels.

A divided audio signal 96a from the D/A converter 96 for audio signal is supplied to audio signal recording input terminals 97b and 98b of the respective divided master tape recording devices 97 and 98.

The respective memory circuits 93 and 94 are constituted with 2-port RAMs each having a write port and a read port.

The digital signals 91a and 92a from the A/D converters 91 and 92 are written in the memory circuits 93 and 94 according to a write address and write timing signals supplied from a write control device 100 through a write control bus 99 and the stored signals are read out therefrom according to a read address and read timing signals, etc., supplied from a read control device 102 through a read control bus 101.

The memory circuits 93 and 94 and the write and read control devices 100 and 102 constitute a signal storing/dividing device 103 which produces two divided master signals divided at a predetermined time interval by temporarily storing the divided signals and changing reading order of the divided signals thereafter.

A reference clock generator 104 produces a timing signal 104a which provides references for sampling period of the A/D converter and a write timing.

A playback/recording control device 105 controls a reproducing operation of the master tape playback device 90 and recording operations of the first and second divided master tape recording devices 97 and 98.

The playback/recording control device 105 controls start, stop and reproducing speed of the master tape playback device 90 through a playback control bus 105a and controls start, stop, recording speed and recording position of the tapes of the first and second divided master tape recording devices 97 and 98 through similar recording control buses 105b and 105c.

The playback/recording control device 105 turns the master tape reproducing device 90 into a playback state and simultaneously supplies a writing start instruction 105d to the control device 100 for causing the memory circuits 93 and 94 to start writing.

The read control device 102 sends a recording instruction 102a to the playback/recording device 105 at a time when a series of write operations completes or digital signal data has been written in substantially a half of a whole memory area by the series of write operations. The recording instruction signal 102a contains an information indicative of whether a signal to be read belongs to the first channel or the second channel mentioned before and the playback/recording control device 105 turns the assigned first or second divided master tape recording device 97 or 98 into recording state.

The read control device 102, when the recording instruction 102a is outputted, reads the respective memory circuits 93 and 94. This reading is performed such that a signal which is continuous in time is divided into two series signals at a predetermined time interval. For example, after the recording instruction 102a is sent to the first divided master tape recording device 97, data corresponding to a period of 0 - 10 seconds of the master tape playback time is read out and then data of 20 - 30 seconds is read out, and, so on. Then, after the device 98 is selected in response to the recording instruction 102a forwarded to the device 98. data of 10 - 20 and 30 - 40 seconds and so on are read out.

In the divided master tape producing apparatus "D" according to the present invention, the time divisional signal division is performed by changing the sequence of reading signals stored in the memory circuits 93 and 94 then the read out signals are recorded in the corresponding first and second divided master tape recording devices 97 and 98, accordingly, the divided master tapes are produced efficiently. Although, in this embodiment, the signal is divided by changing addresses at the reading of the memory circuits 93 and 94, it is possible to constitute a system such that signals in the respective channels are read out continuously by changing addresses at the time of writing.

Although it is possible to temporarily suspend the playback of the original master tape at a time when the writing to the whole areas of the memory circuits 93 and 94 completes, a new signal may be written in an address the content of which has been read out without suspending the reproduction of the original master tape, by suitably setting a time difference between the write and the read according to capacities of the memory circuits 93 and 94.

For the intermittent driving of the first and second divided master tape recording devices 97 and 98, the playback/recording control device 105 may be constructed such that the recording position is exactly control led by rewinding a predetermined amount of the tape right after the recording is stopped, starting the tape running at a time when the recording instruction 102a is supplied from the read control device 102, returning a read enable signal at a predetermined timing by monitoring a tape running control signal prerecorded on the divided master tape, and start reading of the memory circuits 93 and 94 in response to the read enable signal.

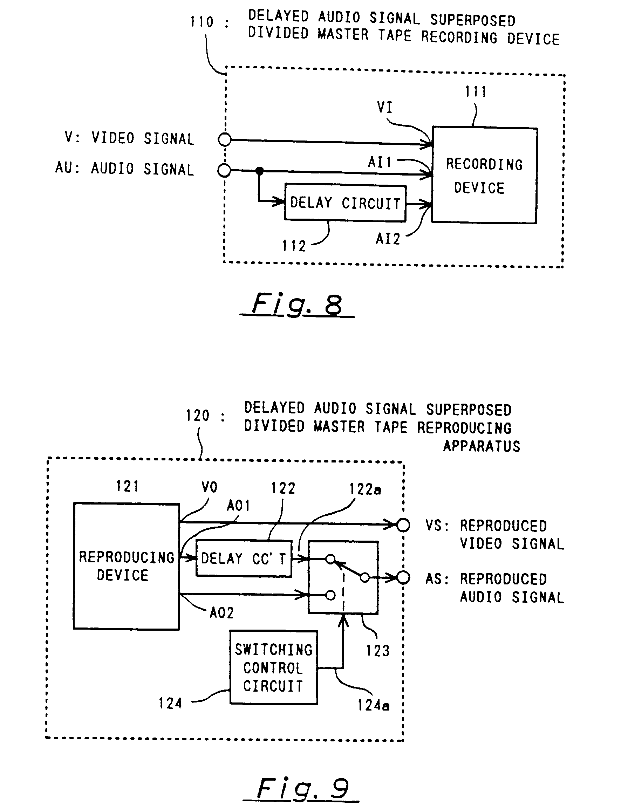

Fig. 8 is a block circuit diagram of a recording device for producing a delayed audio signal superposed divided master tape according to the present invention.

A delayed audio signal superposed divided master tape recording device 110 is a modified version of the first and second divided master tape recording devices 32, 33, 97 or 98 shown in Figs. 5-7 with portions thereof modified. The delayed audio signal superposed/divided master tape recording device 110 comprises a recording device 111 having 2 separate audio signal recording input terminals AI1 and AI2 and a delay circuit 112.

A video signal "V" is supplied to a video signal recording input terminal VI of the recording device 111, an audio signal "AU" is supplied to the recording device 111 to its audio input terminal AI1 directly and to its audio input terminal AI2 through the delay circuit112, respectively.

Accordingly, two kinds of audio signals are recorded on a divided master tape by using this divided master tape recording device 110, one being with a delay and the other without the delay.

Fig. 9 is a block diagram of a delayed audio signal superposed and divided master tape reproducing apparatus according to the present invention.

The delayed audio signal superposed and divided master tape reproducing apparatus 120 shown in Fig. 9 has a similar construction to that shown in Fig. 1, with some modifications of the first and second divided master tape reproducing devices 1 and 2.

The delayed audio signal superposed and divided master tape reproducing apparatus 120 comprises a reproducing, device 121 having two channel signal reproducing output terminals AO1 and AO2, a delay circuit 122 for delaying an audio signal reproduced without delay and supplied from the output terminal AO1, a switching circuit 123 for switching between an audio signal 122a delayed by the delay circuit 122 and an audio signal recorded with delay and supplied from the output terminal AO2 and a switching control circuit 124 for controlling a stitching operation of the switching circuit 123.

A delay time of this delay circuit 122 is same as that of the delay circuit 112 provided within the delayed audio signal superposed and divided master tape reproducing apparatus 110.

A reproduced video signal VS from the video signal output terminal VO is supplied directly to the double speed recording signal producing device 3 shown in Fig. 1 and the reproduced audio signal AS from the switching circuit 123 is supplied to the device 3.

The switching control circuit 124 controls the switching between two kinds of audio signal by supplying a switching control signal 124a to the switching circuit 123 at a preset timing so as not cause a loss of audio signal in the fade-in and fade-out switching process discussed later.

The switching timing is selected such that it is synchronous with an editing interval during production of the divided master tapes.

In a case where the divided master tapes carry control signals related to tape running positions, the apparatus may be constituted as such that it determines editing positions according to the control signal, to produce the switching control signal 124a.

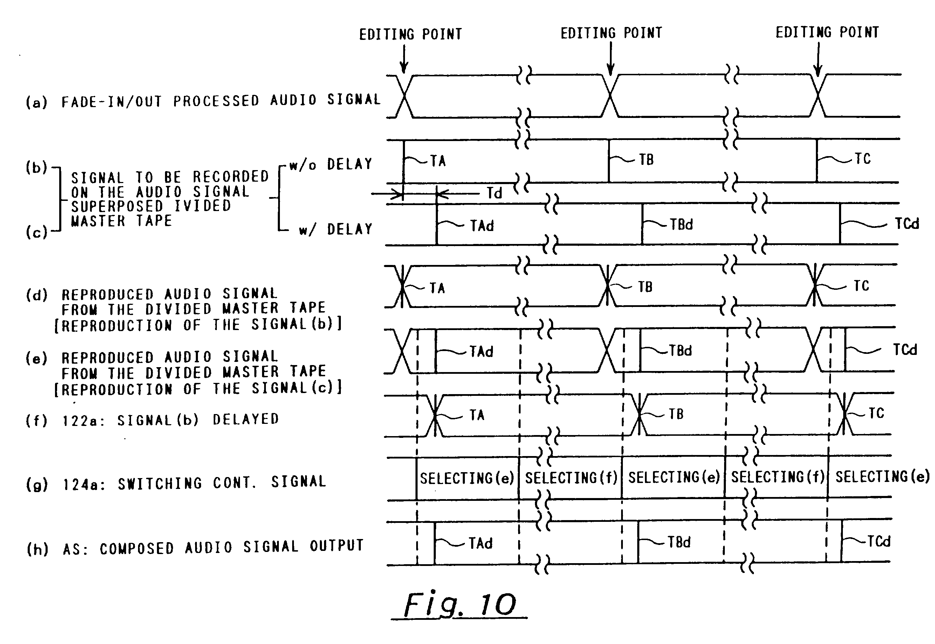

Fig. 10 shows a time chart of an operation of the audio signal switching circuit.

Fig. 10(a) illustrates a signal processing operation of fade-in and fade-out at the editing points.

Fig. 10(b) shows an audio signal to be recorded on the audio signal superposed and divided master tape, where the audio signal is not delayed, and Fig. 10(c) shows another audio signal to be recorded on the audio signal superposed and divided master tape, where above another audio signal is delayed by the delay circuit 112, and Td is a delay time of the delay circuit.

Figs. 10(d) and 10(e) show reproduced audio signals obtained at the output terminals AO1 and AO2 of the reproducing apparatus 121 and Fig. 10(f) shows the signal 122a delayed by the delay circuit 122.

Fig. 10(g) illustrates the switching control signal 124a for selecting either one of the signals shown in Figs. 10(e) and 10(f) as the audio signal output AS and Fig. 10(h) shows the audio signal output AS composed by the switching.

It is possible to obtain a continuous audio signal having no loss by delaying, when reproduced, the audio signal which was recorded without delay to coincide it with the audio signal recorded with delay as shown in Figs. 10 (e) and 10(f), and switching between them by the switching circuit 123 as such that the fade-in and fade-out portions thereof are excluded.

Similarly, it is possible to reproduce an audio multiplexed stereo signal etc., when the divided master recording device and the reproducing device respectively have 4 channels or more.

Although the embodiments have been described for dubbing at a double speed, the dubbing speed can be three or more times by increasing the number of the divided master tape recording devices and the divided master tape reproducing devices and changing the dividing number of a master signal.

Further, in the described embodiments, the signal is divided and combined every color frame, but it is possible to convert the bit rate every segment, every field, every frame or every two frames.

Since the dubbing apparatus according to the present invention is equipped with the N (times) speed recording signal producing device in which reproduced signals in N channels are time compressed to 1/N, respectively, and sequences of the respective signals are restored to be same as that of the original master signal, it is possible to perform a dubbing at the N times speed by using N times speed recording devices.

Further, since the divided master tape producing apparatus according to the present invention divides a reproduced signal from an original master tape at a predetermined time interval and supplies them to the respective master tape recording devices, it is possible to produce a plurality of divided master tapes by a single reproducing operation.

Further, since the divided master tape producing apparatus stores signals divided into N channels in memory devices and then continuously reads them out and supplies them to corresponding divided master tape recording devices, it is possible to prolong the time of intermittent recording operation of the divided master tape recording device and record signals with improved stability.

Further, since the divided master tape producing apparatus according to the present invention stores the reproduced original master signal of the master tape temporarily in a memory circuit and then reads and records it by corresponding divided master tape recording devices, it is possible to produce the divided master tapes efficiently.

Further, since the dubbing apparatus according to the present invention delays the signal, which is originally recorded on a tape without delay, by a delay circuit to remove a time difference from the signal recorded with delay and selects portions of audio signal which are not subjected to fade-in and fade-out process, it is possible to obtain a continuous audio signal even when a device which performs fade-in and fade-out processings of audio signal at editing points, is used.

## Claims

1. A dubbing apparatus comprising:
N number of divided master tape playback devices (1,2) for synchronously playing back a corresponding number of divided master tapes (MA, MB) respectively recorded with N divided master signals obtained by dividing an original master signal into portions of equal time length and distributing said portions so as to form said N divided master signals, and for outputting said N divided master signals, said original master signal having an original data sequence;
N speed recording signal producing means (3) for time-compressing each of said N divided master signals by a factor N and for rearranging the compressed portions of all divided master signals according to said original data sequence of said original master signal to obtain an N speed recording signal (3a, 3b) from said N divided master signals; and
recording means (5) for recording said N speed recording signal on a slave tape running at a speed which is N times a nominal playback speed of said slave tape.

2. The dubbing apparatus claimed in claim 1, wherein each of said divided master tapes is recorded with a first audio signal ((c) in Figure 10) having a predetermined delay time (Td) and a second audio signal ((b) in Figure 10) having no delay, said dubbing apparatus further comprises a delay circuit (122) for delaying said second audio signal reproduced from any one of said N number of divided master tape playback devices, and an audio signal switching circuit (124) for switching between said first audio signal from any divided master tape which is reproduced from a corresponding one of said N number of divided master tape playback devices and said second audio signal from the same divided master tape delayed by said delay circuit.

3. A divided master tape producing apparatus (B, C, D) comprising:
a master tape playback device (30, 90) for playing back a master tape recorded with a master signal;
signal dividing means (31, 31c, 103) for dividing said master signal reproduced from said master tape playback device into portions of equal time length (1CF, 2CF, 3CF,...) and to distribute said portions so as to form a number N of divided master signals; and
divided master tape recording means (32, 33, 97, 98) for producing divided master tapes (MA, MB) by recording said N number of divided master signals on a corresponding number of said divided master tapes;
recording controlling means (35, 80, 105) for controlling the recording of said N number of divided master signals in such a way that each of said divided master signals is continuous on each of said divided master tapes.

4. The divided master tape producing apparatus (C) claimed in claim 3, wherein said divided master tape recording means comprises recording units (32, 33) and said signal dividing means comprises memory means (60) for storing said N number of divided master signals and means for supplying said N number of divided master signals stored in said memory means to corresponding recording units of said divided master tape recording means.

5. The divided master tape producing apparatus (D) claimed in claim 3, wherein said signal dividing means comprises storing/reading means (103) for temporarily storing said master signal reproduced from said master tape playback device (90) and reading said portions of said master signal stored therein into a particular order to form said divided master signals.

## Patentansprüche

1. Überspielgerät, das aufweist:
N Playbackvorrichtungen (1, 2) für unterteilte Masterbänder für die synchrone Wiedergabe einer entsprechenden Anzahl unterteilter Masterbänder (MA, MB), die jeweils mit N unterteilten Mastersignalen bespielt sind, die durch Teilung eines Originalmastersignals in Abschnitte gleicher zeitlicher Länge und Verteilung der Abschnitte so erzeugt werden, daß sie die genannten N unterteilten Mastersignale bilden, und für die Ausgabe der N unterteilten Mastersignale, wobei das Originalmastersignal eine Originaldatenfolge hat;
Aufzeichnungssignalerzeugungsmittel (3) für N-fache Geschwindigkeit, die jedes der N unterteilten Mastersignale mit einem Faktor N zeitlich komprimieren und die komprimierten Abschnitte aller unterteilten Mastersignale in Übereinstimmung mit der Originaldatenfolge des Originalmastersignals neu anordnen, zur Erzeugung eines N-fach schnelleren Aufzeichnungssignals (3a, 3b) aus den N-fach geteilten Mastersignalen; und
Aufzeichnungsmittel (5) zur Aufzeichnung des N-fach schnelleren Aufzeichnungsssignals auf einem untergeordneten Band, das mit einer gegenüber einer nominellen Wiedergabegeschwindigkeit des untergeordneten Bands N-fach höheren Geschwindigkeit läuft.

2. Überspielgerät nach Anspruch 1, bei dem jedes der unterteilten Masterbänder mit einem ersten Audiosignal ((c) in Fig. 10) mit einer vorgegebenen Verzögerungszeit (Td) und einem zweiten Audiosignal ((b) in Fig. 10), das unverzögert ist, bespielt wird, wobei das Überspielgerät außerdem eine Verzögerungsschaltung (122) zur Verzögerung des zweiten Audiosignals, das von irgendeiner der N Playbackvorrichtungen für unterteilte Masterbänder reproduziert wird, und eine Audiosignalumschaltschaltung (124) aufweist, die zwischen dem ersten Audiosignal von irgendeinem unterteilten Masterband, das von einer entsprechenden der N Playbackvorrichtung für unterteilte Masterbänder, wiedergegeben wird, und dem zweiten Audiosignal vom selben unterteilten Masterband, jedoch von der Verzögerungsschaltung verzögert, umschaltet.

3. Gerät (B, C, D) zur Erzeugung unterteilter Masterbänder, das aufweist:
eine Masterbandplaybackvorrichtung (30, 90) zur Wiedergabe eines mit einem Mastersignal bespielten Masterbands;
Signalteilungsmittel (31, 31c, 103) zur Unterteilung des von der Masterbandplaybackvorrichtung wiedergegebenen Mastersignals in Abschnitte gleicher zeitlicher Länge (1CF, 2CF, 3CF, ...) und zur Verteilung dieser Abschnitte, um eine Anzahl N unterteilter Mastersignale zu erzeugen; und
Aufzeichnungsmittel (32, 33, 97, 98) für unterteilte Masterbänder, die unterteilte Masterbänder (MA, MB) durch die Aufzeichnung der N unterteilten Mastersignale auf einer entsprechenden Anzahl der unterteilten Masterbänder erzeugt;
Aufzeichnungssteuermittel (35, 80, 105), die die Aufzeichnung der N unterteilten Mastersignale so steuern, daß jedes der unterteilten Mastersignale kontinuierlich auf jedem der unterteilten Masterbänder aufgezeichnet wird.

4. Gerät (C) zur Erzeugung eines unterteilter Masterbänder gemäß Anspruch 3, bei dem die Aufzeichnungsmittel für die unterteilten Masterbänder Aufzeichnungseinheiten (32, 33) aufweisen, und die Signalteilungsmittel eine Speichereinrichtung (60) zur Speicherung der N unterteilten Mastersignale und eine Einrichtung aufweisen, die die N unterteilten Mastersignale, die in der Speichereinrichtung gespeichert sind, an die entsprechenden Aufzeichnungseinheiten der Aufzeichnungsmittel für unterteilte Masterbänder liefern.

5. Gerät (D) zur Erzeugung unterteilter Masterbänder gemäß Anspruch 3, bei dem die Signalteilungsmittel eine Speicherungs-/Leseeinrichtung (103) aufweist für die Zwischenspeicherung des Mastersignals, das von der Masterbandplaybackvorrichtung (90) wiedergegeben wird und zum Lesen der darin in einer bestimmten Reihenfolge gespeicherten Abschnitte des Mastersignals, um die unterteilten Mastersignale zu bilden.

## Revendications

1. Un appareil de copie ou de duplication comprenant:
- un nombre N de dispositifs de lecture de bande-mère divisée (1,2) pour reproduire en synchronisme un nombre correspondant de bandes-mères divisées (MA, MB) dans lesquelles sont respectivement enregistrés N signaux maîtres divisés obtenus par division d'un signal maître original en parties de durée égale et distribution desdites parties de manière à former lesdits N signaux maîtres divisés, et à émettre lesdits N signaux maîtres divisés, ledit signal maître original ayant une séquence de données originale;
- des moyens de production ou de génération de signaux d'enregistrement à vitesse N (3) pour la compression temporelle de chacun desdits N signaux maîtres divisés d'un facteur N et pour le réarrangement des parties comprimées de tous les signaux maîtres divisés en fonction de ladite séquence de données originale dudit signal maître original pour obtenir un signal d'enregistrement à vitesse N (3a, 3b) à partir desdits N signaux maîtres divisés; et
- des moyens d'enregistrement (5) pour enregistrer ledit signal d'enregistrement à vitesse N sur une bande esclave ou de copie défilant à une vitesse correspondant à N fois la vitesse de reproduction nominale de ladite bande esclave.

2. L'appareil de copie ou de reproduction selon la revendication 1, dans lequel il est enregistré sur chacune desdites bandes-mères divisées un premier signal audio ((c) sur la figure 10) ayant une temporisation (Td) prédéterminée et un second signal audio ((b) sur la figure 10) sans temporisation, ledit appareil de copie ou de reproduction comprenant en outre un circuit de temporisation (122) pour retarder ledit second signal audio reproduit à partir de l'un quelconque dudit nombre N de dispositifs de copie de bande-mère divisée, et un circuit de commutation de signal audio (124) pour commuter entre ledit premier signal audio provenant de l'une quelconque des bandes-mères divisées qui est reproduite par l'un quelconque desdits dispositifs de lecture ou de reproduction de bande-mère divisée de nombre N et ledit second signal audio de la même bande-mère divisée, temporisé par ledit circuit de temporisation.

3. Un appareil de production de bande-mère divisée (B, C, D) comprenant:
- un dispositif de lecture ou de reproduction de bande-mère (30, 90) pour repasser une bande-mère sur laquelle un signal maître est enregistré;
- des moyens de division de signal (31, 31c, 103) pour diviser ledit signal maître reproduit par ledit dispositif de copie de bande-mère en parties de durée égale (1CF, 2CF, 3CF,...) et pour distribuer lesdites parties de manière à former un nombre N de signaux maîtres divisés; et
- des moyens d'enregistrement de bande-mère divisée (32, 33, 97. 98) pour produire des bandes-mères divisées (MA, MB) par l'enregistrement dudit nombre N de signaux maîtres divisés sur un nombre correspondant desdites bandes-mères divisées;
- des moyens de commande et de contrôle d'enregistrement (35, 80, 105) pour commander l'enregistrement dudit nombre N de signaux maîtres divisés de manière que chacun desdits signaux maîtres divisés soit continu sur chacune desdites bandes-mères divisées.

4. L'appareil de production de bande-mère divisée (C) selon la revendication 3, dans lequel lesdits moyens d'enregistrement de bande-mère divisée comprennent des unités d'enregistrement (32, 33) et lesdits moyens de division de signaux comprennent des moyens de mémorisation (60) pour stocker ledit nombre N de signaux maîtres divisés et des moyens pour envoyer ledit nombre N de signaux maîtres divisés stockés dans lesdits moyens de mémorisation aux unités d'enregistrement correspondantes desdits moyens d'enregistrement de bande-mère divisée.

5. L'appareil de production de bande-mère divisée (D) selon la revendication 3, dans lequel lesdits moyens de division de signaux comprennent des moyens de stockage et de lecture (103) pour le stockage temporaire dudit signal maître reproduit à partir dudit dispositif de copie de bande-mère (90) et la lecture desdites parties dudit signal maître qui y est mémorisé dans un ordre particulier pour former lesdits signaux maître divisés.
